# EUROPÄISCHE PATENTSCHRIFT

(11) **EP 0 829 950 B1**
(45) Veröffentlichungstag und Bekanntmachung des Hinweises auf die Patenterteilung: **25.08.1999**
(21) Anmeldenummer: 96114782.4
(22) Anmeldetag: 16.09.1996
(51) Int. Cl.: H02M 7/48, G06F 1/03

(54) **Digital gesteuerter Oszillator**
Digital controlled oscillator
Oscillateur contrôlé numériquement

(43) Veröffentlichungstag der Anmeldung: 18.03.1998
(73) Patentinhaber: Schöller, Kurt, 69502 Hemsbach (DE); Cappel, Harald, 67752 Wolfstein (DE)
(72) Erfinder: Schöller, Kurt, D-69502 Hemsbach (DE); Fiedler, Meinrad, Dipl.-Ing., D-67655 Kaiserslautern (DE); Böttcher, Georg, Dipl.-Ing., D-67855 Kaiserslautern (DE); Wasenmüller, Uwe, Dipl.-Ing., D-67691 Hochspeyer (DE)
(74) Vertreter: Schmid, Rudolf, Dipl.-Ing., Patentanwalt

(56) Entgegenhaltungen:
- DE-A- 4 029 446
- US-A- 4 346 448
- US-A- 4 727 468
- US-A- 5 091 841

## Beschreibung

Die Erfindung betrifft digitale, frequenz- und amplitudenvariable Drehstromgeneratoren zur Erzeugung sinusförmiger Signale, insbesondere zur Erzeugung von drei frequenzvariablen Sinuswechselspannungen zur Steuerung von elektrischen Synchronmaschinen.

Bekannt sind sogenannte spannungsgesteuerte Oszillatoren, bei denen die Frequenz des Oszillators bestimmt ist durch eine am Oszillator angelegte, einstellbare Steuerspannung. Die Bandbreite innerhalb der die Frequenzen spannungsgesteuerter Oszillatoren variieren können, ist abhängig von Widerstand und Kapazität, der sogenannten RC-Konstante, spannungsgesteuerter Oszillatoren. Auf Grund dieser RC-Konstanten weisen diese bekannten spannungsgesteuerten Oszillatoren Frequenz-Bandbreiten auf, die nur jeweils von 10 Hz bis 1000 Hz, 1 kHz bis 10 kHz, usw. ... reichen.

Aus der US-A- 4 727 468 ist ein mittels Pulsbreitenmodulation gesteuerter Schaltkreis mit einem Zähler offenbart. Ein Hinweis auf die Erzeugung von drei frequenzvariablen Sinuswechselspannungen zur Steuerung von elektrischen Synchronmaschinen ist diesem Stand der Technik nicht zu entnehmen.

Die US-5 091 841 offenbart eine Vorrichtung zur Steuerung von Schaltern in dreiphasigen Frequenzwandlern mit Pulsbreitenmodulation. Auch der US-5 091 841 ist kein Hinweis auf die Erzeugung von drei frequenzvariablen Sinuswechselspannungen zur Steuerung von elektrischen Synchronmaschinen zu entnehmen.

Aufgabe der Erfindung ist es, frequenz- und amplitudenvariable Drehstromgeneratoren mit verbesserten Frequenz-Bandbreiten zu schaffen, die sinusförmige Signale erzeugen, insbesondere zur Erzeugung von drei frequenzvariablen Sinuswechselspannungen zur Steuerung von elektrischen Synchronmaschinen.

Die Lösung erfolgt mit digitalen, frequenz- und amplitudenvariablen Drehstromgeneratoren mit den Merkmalen des Anspruchs 1 und mit dem erfindungsgemäßen digitalen, frequenz- und amplitudenvariablen Drehstromgenerator zur Regelung oder Steuerung eines Synchron-Drehstrommotors mit den Merkmalen des Anspruchs 10.

Gemäß der Erfindung weist ein digitaler, frequenz- und amplitudenvariabler Drehstromgenerator vier Teilsysteme auf. Ein erstes Teilsystem des erfindungsgemäßen, digitalen, frequenz- und amplitudenvariablen Drehstromgenerators enthält mindestens drei Sinusgeneratoren, die vorzugsweise drei um 120° jeweils zueinander phasenverschobene Sinusspannungen erzeugen. Die Sinusgeneratoren enthalten einen Phasen- und Amplitudenzähler und jeweils einen Digital/Analog-Wandler.

Ein Ordinatenspeicher enthält adressierbare 1 Bit Speicherplätze, die von einem der Zähler adressiert werden können. Logische Einheiten dienen zu einer Steuerung der Zähler und damit der Bestimmung der Speicherplatzadressen, für eine effektive Nutzung der Symmetrien beispielsweise innnerhalb einer Phase einer Sinuskurve.

Ein zweites Teilsystem des erfindungsgemäßen, digitalen, frequenz- und amplitudenvariablen Drehstromgenerators enthält einen digital gesteuerten Oszillator, der die Sinusgeneratoren mit vorzugsweise 1 Bit Worten ansteuert, die signalisieren, ob die Sinusgeneratoren jeweils zu den nächsten folgenden Signalwert weiterzählen werden.

Ein drittes Teilsystem des erfindungsgemäßen, digitalen, frequenz- und amplitudenvariablen Drehstromgenerators enthält eine Frequenzsteuerung, die zwischen einer start und einer Endfrequenz die Variation der Frequenzen bestimmt.

Ein viertes Teilsystem des erfindungsgemäßen, digitalen, frequenz- und amplitudenvariablen Drehstromgenerators enthält eine Schnittstelle, die vorzugsweise über einen bidirektionalen Puffer Werte entgegennimmt oder Werte an diesen Puffer Werte ausgibt.

Mit den digitalen, frequenz- und amplitudenvariablen Drehstromgeneratoren zur Erzeugung sinusförmiger Signale gemäß der Erfindung können Frequenzen in einem Verhältnis ron fmin/fmax = 1:100 000 variabel eingestellt werden, wobei die Schrittweite zwischen zwei aufeinanderfolgenden Frequenzen nicht größer als 1% ist, um Frequenzänderungen während Anlauf- und Abbremsphasen nicht zu groß werden zu Lassen, wobei die Anlaufzeiten für das Hochlaufen und Abbremsen niedrig bleiben.

Gemäß einer bevorzugten Ausgestaltung der Erfindung sind die Digital/Analog-Wandler der Sinusgeneratoren jeweils mit nachgeordneten Schaltungen aus Widerständen und Verstärker versehen, die aus der positiven Ausgabe der D/A-Wandler eine zur Achse mit der Nullspannung verschobene Spannungsausgabe bereitstellt, die gleich große positive und negative Spannungswerte aufweist.

Gemäß einer vorteilhaften Ausgestaltung der Erfindung weist das zweite Teilsystem des erfindungsgemäßen, digitalen, frequenz- und amplitudenvariablen Drehstromgenerators einen digital gesteuerten Oszillator mit Logik für den Aufbau eines Synchronzählers.

Gemäß einer Ausgestaltung der Erfindung können die Digital/Analog-Wandler der Sinusgeneratoren mit einem Analogschalter zur Invertierung der Ausgangsspannung bei einem Phasenwinkel von 180°und zum Zurückschalten auf die nichtinvertierte Ausgangsspannung bei 0° = 360° versehen sein, und die Sinusgeneratoren können zu diesem Zweck einen Zähler und einen Flipflop zur Speicherung aufweisen.

Die Erfindung wird im folgenden anhand eines Ausführungsbeispiels dargestellt. Es zeigen:
Fig. 1: einen digitalen, frequenz- und amplitudenvariablen Drehstromgenerator zur Erzeugung sinusförmiger Signale gemäß der Erfindung,
Fig. 2: einen digitalen, frequenz- und amplitudenvariablen Drehstromgenerator zur Erzeugung sinusförmiger Signale gemäß der Erfindung mit detaillierter Darstellung der Einzelkomponenten,
Fig. 3: eine alternative Schaltungsanordnung zur Erzeugung sinusförmiger Signale gemäß der Erfindung.
Fig. 4 stellt ein Drehstrom-Winkelschritt-Regelsystem gemäß der Erfindung dar.

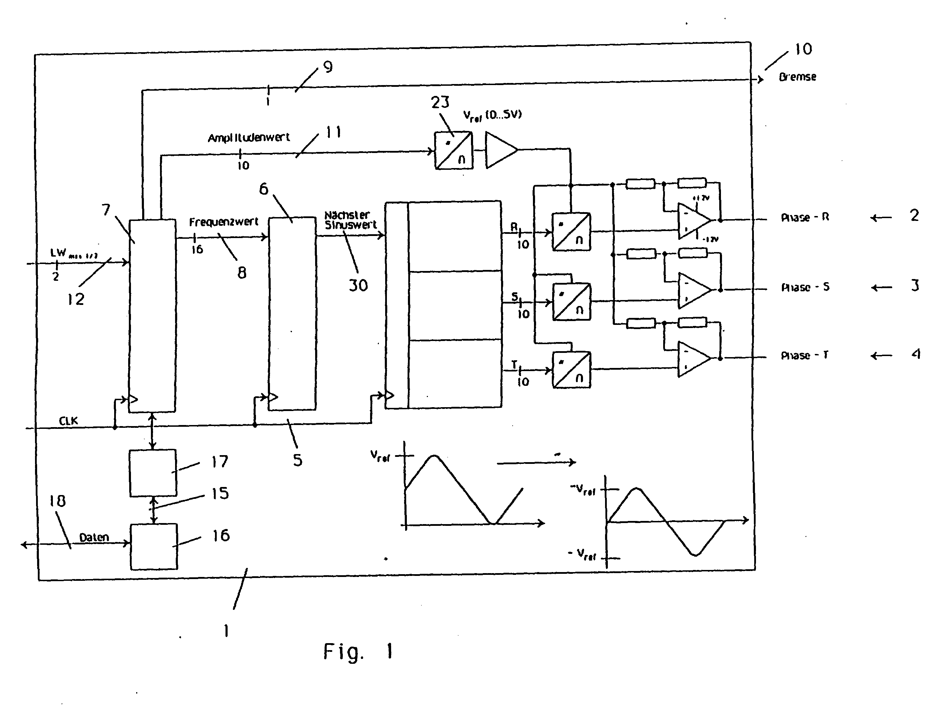

Fig. 1: Ein digitaler, frequenz- und amplitudenvariabler Drehstromgenerator 1 zur Steuerung einer elektrischen Synchronmaschine (nicht dargestellt) weist als D/A Wandler ausgebildete Sinusgeneratoren 2, 3, 4 auf, die jeweils eine Sinusspannung erzeugen, die zueinander um 120° phasenverschoben sind. Die Sinusgeneratoren 2, 3, 4 empfangen ein Taktsignal über eine Steuerleitung 5.

Die Sinusgeneratoren 2, 3, 4 werden von einem digital gesteuerten Oszillator 6 über eine Leitung 30 mit 1 Bit Worten angesteuert, die mit variabel einstellbarer Frequenz ihren Zustand von 0 auf 1 ändern. Der gesteuerte Oszillator 6 empfängt ein Taktsignal über die Steuerleitung 5.

Eine Frequenzsteuerung 7 bestimmt die Variation der Frequenzen zwischen einstellbaren Start- und Endfrequenzen. Die Frequenzsteuerung 7 weist eine unidirektionale Steuerleitung 8 zu dem digital gesteuerten Oszillator 6, eine unidirektionale Steuerleitung 9 zu einer Anzeige 10 für Bremsen und eine unidirektionale Steuerleitung 11 zur Steuerung der Amplituden der analogen Ausgangsspannungen der Sinusgeneratoren 2, 3, 4 auf. Die Frequenzsteuerung 7 empfängt ein Taktsignal über die Steuerleitung 5. Maximale erste und zweite Lastmomente LWMAX1 und LWMAX2 werden der Frequenzsteuerung 7 über Steuerleitungen 12 vorgegeben.

Eine Schnittstelle 15 nimmt über einen bidirektionalen Puffer 16 Werte entgegen oder gibt Werte an diesen Puffer 16 aus. Die Schnittstelle 15 enthält Register 17, in denen Parameter für den Betrieb des digitalen, frequenz- und amplitudenvariablen Drehstromgenerators 1 zur Steuerung einer elektrischen Synchronmaschine bestimmbar eingegeben werden können. Den Registern 17 können erste und zweite Lastmomente, die beim Betrieb des digitalen, frequenz- und amplitudenvariablen Drehstromgenerators 1 zur Steuerung einer elektrischen Synchronmaschine auftreten können über eine Steuerleitung 18 eingegeben werden.

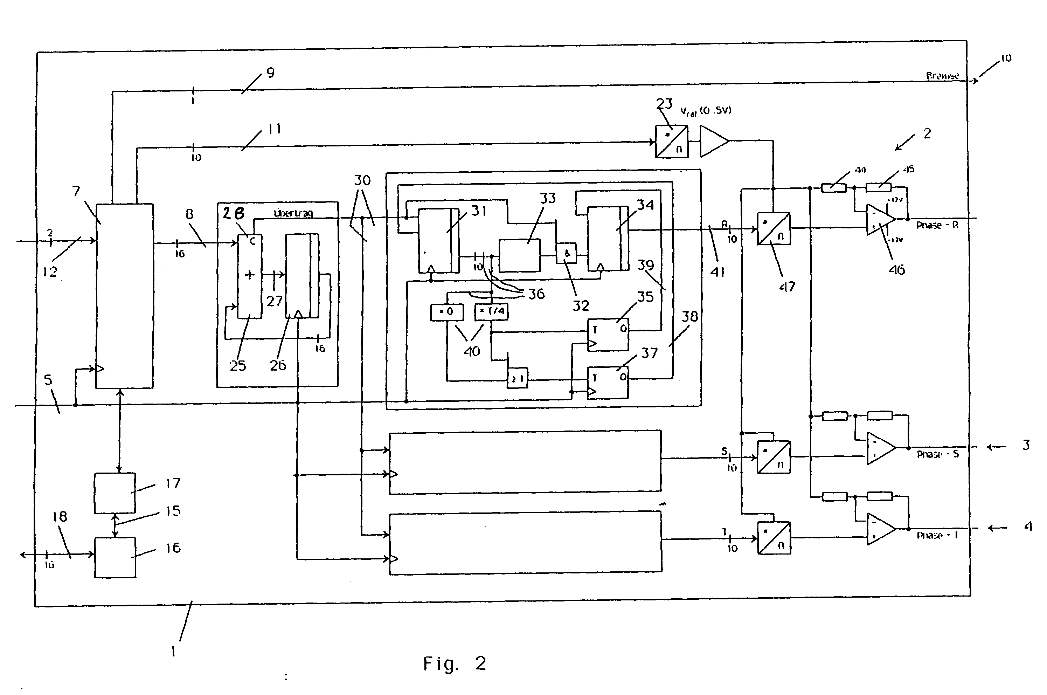

Fig. 2: Es werden für identische Merkmale die Bezugszeichen aus Figur 1 verwendet.

Die Frequenzsteuerung 7 übergibt über die unidirektionale Steuerleitung 8 ein n- Bit Wort zu dem digital gesteuerten Oszillator 6, wobei vorzugsweise n = 16 oder 18 ist. Die unidirektionale Steuerleitung 11 zur Steuerung der Amplituden übertragt ein 10 Bit Wort an einen D/A Wandler 23 mit einem Wert, der zur Einstellung der analogen Ausgangsspannungen der Sinusgeneratoren 2, 3, 4 und damit zur Einstellung der Amplituden der sinusförmigen Signale des digitalen, frequenz- und amplitudenvariablen Drehstromgenerators dient.

Der digital gesteuerte Oszillator 6 weist einen Addierer 25 und einen Speicher 26 auf. Der Addierer 25 erhält von der Frequenzsteuerung 7 über die unidirektionale Steuerleitung 8 n-Bit Worte, die den jeweils aktuellen Wert eines von der Frequenzsteuerung vorgegebenen Inkrements wiedergeben. Das Inkrement wird im Addierer 25 einem n-Bit Wert zu addiert, den der Addierer 25 bei jedem Takt, den der Speicher 26 von der Steuerleitung 5 empfängt, aus dem Speicher 26 übertragen wird. Jede vom Addierer 25 gebildete Summe wird über Leitung 27 in den Speicher 26 übertragen. Erreicht der Wert des n-Bit Wort seinen maximalen Betrag, setzt der Addierer 25 ein Bit am Ausgang 28, das auf 0 voreingestellt ist, auf den Wert 1 und überträgt den Überlauf aus der zuletzt gebildeten Summe an den Speicher 26 (Modulo-Verfahren). Ist das von der Frequenzsteuerung 7 vorgegebene Inkrement betragsmäßig klein, dauert es vergleichsweise lang bis z. B. ein 16 Bit Wort seinen maximal darstellbaren Wert erreicht hat, und die Frequenz mit der an Ausgang 28 der Wert 1 ausgegeben wird, ist niedrig. Bei großem Inkrement ergibt sich eine hohe Frequenz am Ausgang 28.

Vom digital gesteuerten Oszillator 6 wird das 1 Bit Wort von Ausgang 28 über Leitungen 30 an die Sinusgeneratoren 2, 3 und 4 verzweigt übergeben. Leitung 30 beaufschlagt z. B. in Sinusgenerator 2 einen Zähler 31 für eine Phasengrobeinteilung und eine Vorrichtung 32 für eine logische Und-Verknüpfung. Ein Ordinatenspeicher 33 enthält adressierbar gespeicherte 1 Bit Worte mit Amplitudeninkrementen. Ist der 1 Bit Wert von Leitung 30 am Zähler 31 und an der Vorrichtung 32 gleich 1, zählt der Zähler 31 für Phasengrobeinteilung und die Vorrichtung 32 für logische Und-Verknüpfung um eins weiter, d. h. es wird der nächste Phasenwert gebildet, und das diesem aktuellen Phasenwert zugehörige Amplitudeninkrement aus dem Ordinatenspeicher 33 wird in einen Amplitudenzähler 34 geladen und dort dem zuletzt abgespeicherten Amplitudenwert hinzuaddiert. Die unterschiedlichen Phasenwerte des Zählers 31 für Phasengrobeinteilung sind z. B. in einem 10 Bit Wort dargestellt, die Adressen für die im Ordinatenspeicher 33 abgespeicherten Amplitudeninkremente entsprechen, unter denen jeweils die 1 Bit Worte zugeordnet sind, die je nach Steigung des Sinusverlaufs bei den jeweiligen Phasenwerten eine 0 oder ein 1 enthält.

vorzugsweise sind im Ordinatenspeicher 33 mindestens 804 adressierbare 1 Bit Worte für eine ausreichend genaue Darstellung eines Viertel eines Sinusverlaufs enthalten.

Über Leitungen 36 wird logischen Einheiten 35, 37, die insbesondere als Flip-Flop ausgebildet sind, der jeweils aktuelle Wert der Phasengrobeinteilung aus dem Zähler 31 übergeben. Hat der Phasenwert des Zählers 31 für Phasengrobeinteilung den Wert für ein Viertel einer vollen Phase, z. B. gleich 90° erreicht, wird von den logischen Einheiten 35, 37 jeweils ein Steuerbit gesetzt, das über eine Leitung 38 an den Zähler 31 für Phasengrobeinteilung und über eine Leitung 39 an den Amplitudenzähler 34 übergeben wird und diese jeweils in ihrer Zählrichtung umkehrt, so daß vom letzten Wert der Phasengrobeinteilung aus dem Zähler 31 jeweils der Wert 1 und vom letzten Wert, der im Amplitudenzähler 34 gespeichert war, das dem aktuellen Wert der Phasengrobeinteilung aus Zähler 31 zugehörige Amplitudeninkrement aus dem Ordinatenspeicher 33 subtrahiert wird.

Hat der Zähler 31 für Phasengrobeinteilung wieder den Wert 0 erreicht, der z. B. gleich dem Wert für die halbe Phase ist, wird von der logischen Einheit 37 die Zählrichtung des Zählers 31 für Phasengrobeinteilung wieder umgekehrt von 0 nach oben; es wird also wieder addiert im Zähler 31. Die zugehörigen Amplitudeninkremente aus dem Ordinatenspeicher 33 werden im Amplitudenzähler 34 weiter subtrahiert, bis der Zähler 31 wieder T/4 erreicht.

Hat der Zähler 31 für Phasengrobeinteilung wieder den Wert T/4 erreicht, der z. B. gleich dem Wert für die dreiviertel Phase ist, wird die Zählrichtung des Zählers 31 für Phasengrobeinteilung wieder umgekehrt auf Subtrahieren bis die Phase abgeschlossen ist, und die in Amplitudenzähler 34 gebildeten Amplituden werden durch Addieren der Amplitudeninkremente aus dem Ordinatenspeicher 33 mit dem vorhergehenden Wert gebildet.

Vergleichsbausteine 40 prüfen, ob die Werte für 0 oder T/4 erreicht sind. Bei n x T/4 schalten die logischen Einheiten 35, 37 das Steuerbit, wobei die logische Einheit 35 schaltet wenn n = 0, 1, 2, 3, ... und die logische Einheit 37 schaltet bei n = 1, 3, 5, 7 ....

Der durch Addition eines Absolutbetrags im Amplitudenzähler 34 für alle Phasenwerte positive 10 Bit Wert für die Amplitude aus dem Amplitudenzähler 34 wird über Leitung 41 an den D/A Wandler 47 des Sinusgenerators 2 weitergegeben und in ein analoges Signal umgesetzt. Die Nullpunktsverschiebung des analogen Signals am Ausgang 41 des D/A Wandlers 2, die bedingt ist durch die Addition des absoluten Werts im Amplitudenzähler 34 wird rückgängig gemacht durch eine Schaltung aus zwei Widerständen 44, 45 und einem Verstärker 46, so daß ein analoges Signal mit einer Frequenz ausgegeben wird, die abhängig ist von der Größe des Inkrements im digital gesteuerten Oszillator 6 und der Frequenz des Takts auf Leitung 5. Die Amplitude des analogen Signals ist einstellbar durch die Größe des Werts, der am D/A Wandler 23 eine Bezugsspannung von z. B. zwischen 0 und 5 V angibt.

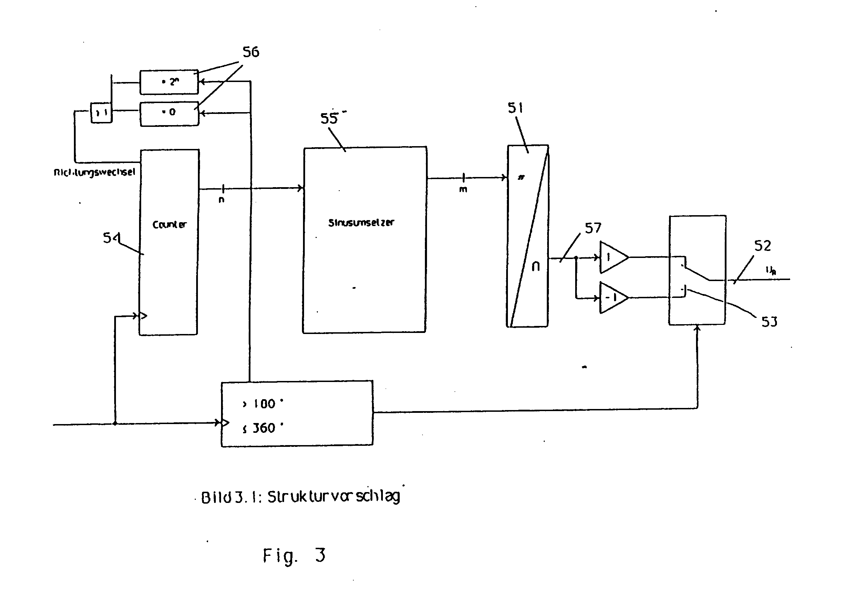

Fig. 3: Gemäß einer alternativen Ausgestaltung zur Nutzung der Symmetrien einer Sinuskuve enthalten die Sinusgeneratoren 2, 3, 4 jeweils einen Digital/Analog Wandler 51, dessen Ausgangswert unverändert an einen Ausgang 52 weitergegeben wird, wenn das vom Digital/Analog Wandler 51 ausgegebene Sinussignal einem Phasenwert ρ von 0° ≤ ρ ≤ 180° entspricht und dessen Ausgangswert mit einem Analogschalter 53 invertiert an den Ausgang 52 weitergegeben wird, wenn das vom Digital/Analog Wandler 51 ausgegebene Sinussignal einem Phasenwert ρ von 180° ≤ ρ ≤ 360° entspricht.

Der Betrag des Phasenwerts p ist in einem binären Wort mit n Stellen enthalten. Ein Zähler 54 zählt synchron zu dem Phasenwert ρ von 0° bis 90°, wobei der Zählerstand 0 dem Phasenwert ρ = 0° und der Phasenwert ρ = 90° einem Zählerstand von 2ⁿ entspricht. Ist der Zähler 54 bei 2ⁿ, was in Vergleichsbausteinen 56 festgestellt wird, zählt der Zähler 54 wieder rückwärts bis 0 und die den Phasenwerten im Ordinatenspeicher 55 zugeordneten Sinuswerte werden entsprechend rücklaufend wieder zugeordnet. Die den Phasenwerten jeweils zugeordneten Sinuswerte werden also jeweils nur für eine Viertelsphase von 0 ≤ ρ ≤ 90° im Ordinatenspeicher 55 gespeichert. Für die Phasenwerte ρ von 90° ≥ ρ ≥ 180° werden die entsprechenden Sinuswerte zugeordnet aus dem Intervall der Phasenwerte p von 90° ≥ ρ ≥ 0°.

Für die Phasenwerte ρ von 180° ≤ ρ ≤ 270° werden dem Sinusumsetzer 55 die Sinuswerte der Phasenwerte ρ von 0° ≤ ρ ≤ 90° und von 270° ≤ ρ ≤ 360° die Phasenwerte ρ von 90° ≥ ρ ≥ 180° zugeordnet. Die Werte am Ausgang 57 des Digital/Analog Wandlers 51 für eine ganze 360° Phase ergeben sich also entsprechend zu 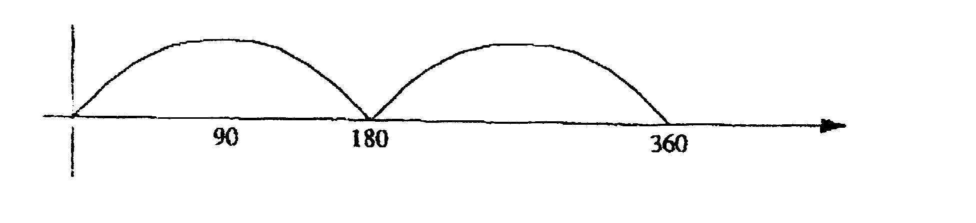 und die Ausgangswerte nach dem Analogschalter 53 am Ausgang 52 zu

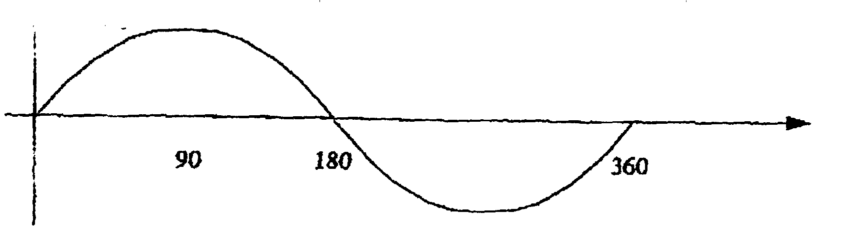

Zur Abbildung einer möglichst genauen Sinuskurve am Ausgang 52 kann jedem Phasenwert ρ ein Sinuswert (Amplitude) zugeordnet werden. In einem beispielsweise flachen Teilbereich der Sinuskurve können aufeinanderfolgende Sinuswerte gleiche Werte haben, was aber für die Realisierung einer Sinuskurve keine Aufwandsreduzierung ergibt.

Zur Erzeugung eines digitalisierten sinusförmigen Signals mit einstellbaren Frequenzen kann gemäß einer weiteren Alternative (nicht dargestellt) eine konstante Anzahl von Abtastwerten einer Phase mit fester, äquidistanter Unterteilung mit unterschiedlichen Frequenzen durchlaufen werden.

Soll mittels dieser Alternative ein digitalisiertes, sinusförmiges signal mit einstellbaren Frequenzen erzeugt werden, können z. B. die 360° einer Phase in 1020 äquidistante Abtastwerte unterteilt werden. Jeder der 1020 äquidistanten Abtastwerte ist in einem Speicher adressierbar ein Amplitudenwert oder Inkrement zugeordnet, und die jeweils zugehörigen Adressen können von einem Zähler adressiert werden. Läuft der Zähler beispielsweise mit unterschiedlichen Frequenzen durch die o.g. 1020 Abtastwerte, ergeben sich für das zu erzeugende sinusförmige Signal ebenfalls unterschiedliche Frequenzen. Soll etwa das zu erzeugende sinusförmige Signal eine Frequenz von 1 Hz haben, müßte bei 1020 Abtastwerten der Zähler mit einer Frequenz von 1020 Hz von einem Zählerstand zum nächsten zählen. Soll das zu erzeugende sinusförmige Signal eine Frequenz von 100 Hz haben, müßte bei 1020 Abtastwerten der Zähler mit *einer* Frequenz von 102 kHz von einem Zählerstand zum nächsten zählen, usw....

Die Frequenz des Zählers ist unter Beachtung der maximalen Wandlerraten zu bestimmen. Die Wandlerrate ist bei der sogenannten ES2 Technologie auf 570 kHz für Wandler mit 10 Bit Wortlängen beschränkt.

Soll die genannte Wandlerrate von 570 kHz überschritten werden, sind unter Umständen externe Wandler erforderlich.

Sollen die Veränderungen der Frequenzen des zu erzeugenden sinusförmigen Signals mit dieser Alternative nur in kleinen Schritten erfolgen, z. B. in Schritten von 1%, ergeben sich eine Mindestfrequenz für das System von 570 MHz und eine maximale Zählerfrequenz von 570 kHz.

Der digital gesteuerten Oszillator 6 kann mit Logik für den Aufbau eines Synchronzählers und für den Aufbau eines Sinusumsetzers ausgestattet sein, um vorzugsweise Sinuswerte durch Interpolation oder Delta-Demodulation zu erzeugen. Der digital gesteuerte Oszillator 6 kann ein externes RAM und externe Pins aufweist, um von außen einen z. B. von einem Sinusverlauf abweichenden Signalverlauf zu implementieren.

Die Anwendung des erfindungsgemäßen digitalen, frequenz- und amplituden variablen Drehstromgenerators zur Regelgung- bzw. Steuerung eines Synchron-Drehstrommotors ermöglicht auf einfache Weise, ohne den Einsatz üblicher Istwertgeber (Winkeldekoder), eine Regel- bzw. Stellgenauigkeit, die bislang nur mit erheblichem Regelaufwand erreicht werden konnte.

Die Verwendung eines Synchron-Drehstrommotors bietet den besonderen Vorteil, daß er, wie alle Drehstrommotoren, in einem großen Leistungsbereich von wenigen Watt bis mehreren Kilowatt zu betreiben ist.

Durch die Tatsache, daß die Motorwelle eines Dreiphasen-Synchron-Drehstrommotors immer analog der dem Drehfeld angelegten Netzfrequenz folgt, kann, durch Auszählen der Taktimpulse, die Winkelstellung des Ankers stets exakt ermittelt bzw. der Winkel-Ist-Wert stets verfolgt werden.

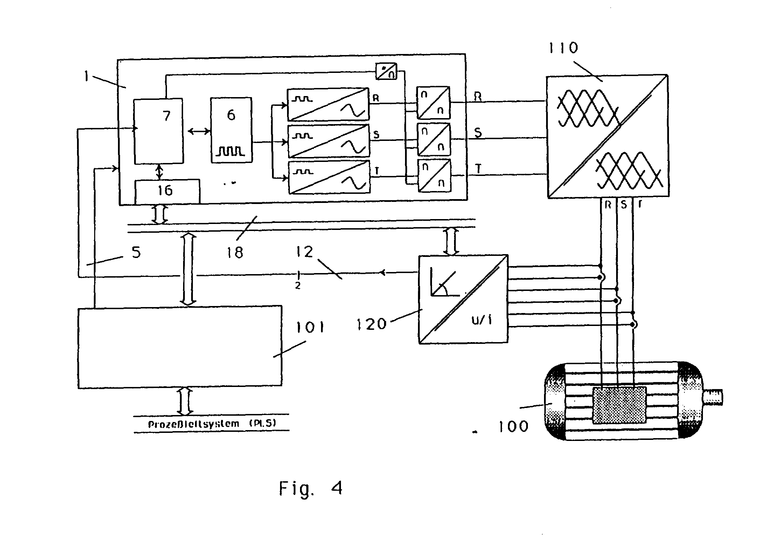

Fig. 4: Innerhalb eines Mikroprozessors 101 werden alle Steuersignale verarbeitet, die zur Steuerung des synchronen Drehstrommotors 100 erforderlich sind. Angaben bezüglich des Winkelweges, falls erforderlich die Stellgeschwindigkeit, sowie ein bestimmtes Nenndrehmoment können vor Inbetriebnahme sowohl von Hand, als auch über ein angeschlossenes Rechner-Bussystem (nicht dargestellt) eingegeben werden.

Eine Rampensteuerung dient zum gleichförmigen An-, bzw. Abfahren einer Motordrehzahl (n). Die Rampensteilheit (v/°) wird ausschließlich durch das Trägheitsmoment des verwendeten Synchron-Drehstrommotors, sowie die daran gekoppelte Bewegungsmasse bestimmt und wird als Festwert in den Mikroprozessor 101 eingespeichert.

Zur Erzeugung der Motornetzfrequenz (f_{cn}) ist der erfindungsgemäße digitale frequenz- und amplituden variable Drehstromgenerator 1 vorgesehen. Die darin erzeugte Frequenz (f_{cn}) wird durch den integrierten, digital gesteuerten Oszillator 6 bestimmt und kann von 0 Hz bis auf einige 100 Hz hinaufgeregelt werden. Auf diese Weise ist eine stufenlose Änderung der Stellgeschwindigkeiten (v) und Drehzahländerung des Stellantriebes von 0 U/sec bis nₘₐₓ ( nₘₐₓ = fₘₐₓ) möglich.

Die Frequenzregelung ist sowohl beim Beschleunigen, Abbremsen, sowie während des Laufs als Drehmomentüberwachung wirksam, da ein Schlupfsprung des Motorankers auf keinen Fall auftreten darf, sofern die Regelanforderung stets oberste Priorität bleiben soll.

Zur Leistungsverstärkung ist dem Drehstromgenerator 1 ein Leistungsverstärker 110 nachgeschaltet, welcher aus der Dreiphasen-Drehstromfrequenz, die der Drehstromgenerator 1 liefert, einen, der aufgenommenen Motorleistung entsprechenden, Drehstrom erzeugt.

Die Nennmomentüberwachung erfüllt zwei Funktionen:
1. Ermittlung der Lastwinkelabweichung zur genauen Positionierung.
2. Nennmomentüberwachung zur Vermeidung eines Schlupfsprungs des Motorankers (Nm1, Nm₂).

Der Nennmomentwert Nm ist ein, dem Drehmoment der Motorwelle entsprechender Analogwert, welcher in digitaler Form, zwecks Lastwinkelkorrektur, sowie zur mittelbaren Kontrolle des Nennmoments vom Mikroprozessor 101 - zu jeder Zeit - übernommen werden kann.

Da der angeschlossene Synchron-Drehstrommotor synchron, d. h. proportional der Netzfrequenz (fₙ) folgt, die Netzfrequenz in dieser Schaltung digital aus 3160 Impulsen zusammengesetzt wird, ist eine Wegerfassung durch Zählen der fₙ Impulse leicht möglich. Die gezählten Impulse entsprechen analog der Winkelstellung des Motorankers (zzgl. Lastwinkel), wodurch eine exakte Wegerfassung, bzw. Positionierung des Motorankers ermöglicht wird. Sie entsprechen analog der Winkelstellung des Motorankers (zuzüglich Lastwinkel), wodurch eine exakte Wegerfassung, bzw. Positionierung des Motorankers ermöglicht wird.

### Funktionsbeschreibung

Sind dem Mikroprozessor 101 die entsprechenden Arbeitskoordinaten (Winkelweg, Nenndrehmoment, Rampensteilheit, Stellgeschwindigkeit und Drehrichtung R/L) eingegeben worden, so werden diese entsprechend aufgeschlüsselt und an die jeweiligen Systemkomponenten (Wegzähler, Nennmomemtüberwachung und Drehstromgenerator) weiter gegeben.
Anmerkung: Für den Fall daß keine Stellgeschwindigkeit, sowie kein Nenndrehmoment angegeben wird, werden stets die maximalen Nennwerte (Vₘₐₓ; Mₘₐₓ), welche systembezogen fest einprogrammiert sind, angestrebt. Motordaten, wie Induktivität und Widerstand werden entsprechend des eingesetzten Synchron-Drehstrommotors eingegeben, d. h. dauerhaft gespeichert.
Der Drehstrommotor 100 kann nun durch Auslösen des "Start"-Signals (ST) in Betrieb gesetzt werden. Den eingegebenen Nenndaten entsprechend beginnt der Drehstromgenerator 1 mit der Erzeugung der Ausgangsfrequenz (fₙ), die dem angeschlossenen Leistungsverstörker 110 zugeführt wird, welche den angeschlossenen Drehstrommotor 100 mit dem entsprechenden Drehstrom speist, dessen Anker sich - synchron - mit dem Netzdrehfeld der Drehstromfrequenz (fₙ) bewegt.

Entspricht schließlich die Summe der Zählimpulse einem Wert, der sich aus dem Wegvorgabewert abzüglich einem Restweg ergibt, so wird dies dem Mikroprozessor 101 mitgeteilt, worauf dieser von diesem Moment an die Regelung des Restwegs übernimmt. Der Mikroprozessor 101 hat den Wegvorgabewert und den Restweg eingespeichert. Nach einer festgesetzten Impulszahl beginnt er als nächstes, die Motordrehzahl über die Rampensteuerung, bis auf eine Mindestdrehzahl (Vₘᵢₙ) zu reduzieren. Der Drehstrommotor 100 wird dann mit dieser minimalen Drehgeschwindigkeit bis zum Wegvorgabewert weitergefahren.

Während der Drehstrommotor nun mit einer Mindestdrehzahl - konstant - weiter läuft wird die Lastwinkelabweichung des Motorankers zum Netzdrehfeld erfaßt, d.h. in den Mikroprozessor 101 eingelesen und dem Wegsollwert hinzuaddiert. Ist schließlich die Zahl der eintreffenden Zählimpulse dem Wert des Weg-Sollwert plus Lastwinkelabweichung gleich ( IST = SOLL), ), wird der Drehstrommotor 100, durch Abschalten des ST-Signals, gänzlich stillgesetzt ( f'_{cn}=n=0), denn der Motoranker hat seine IST-Position erreicht.

Da in den meisten Anwendungsfällen immer wieder aus einer erreichten Position, die schließlich eine Ausgangsposition für weitere Positionen darstellt, immer wieder neu angefahren werden soll oder muß und folglich die gesammelten Weginformationen nicht verloren gehen dürfen, darf folglich der Motoranker seine zuletzt eingenommene Winkelposition nicht eigenmächtig verlassen. Für diese Zeitspanne, in welcher der Drehstrommotor 100 still steht ( f_{cn}=n=0), bleibt eine sogenannte Ständerstillstandspannung (U₀), in der Phasenlage, die der momentanen Position entspricht, erhalten und bewirkt auf diese Weise, daß der Motoranker somit seine angesteuerte Position beibehält.
Ein erneuter Anlauf des Drehstrommotors 100, mit neuen, oder den gleichen Arbeitskoordinaten ist jederzeit, durch die Eingabe eines Start-Signals (ST) möglich.

Vielfach wird es der Fall sein, daß der Drehstrommotor 100 aber nicht nur in einer, sondern nach zwei Richtungen (Rechts-/Linkslauf) betrieben werden soll. Die Richtungsumkehr des Drehstrommotors 100, welche durch die Richtungsumkehr des Drehfeldes bewirkt wird, erfolgt innerhalb dieses Regelsystems in der Tat durch die Richtungsumkehr des Drehfeldes innerhalb des Drehstromgenerators 1. Je nach Drehrichtung des Drehstrommotors 100 liefert dieser einmal ein Rechts- bzw. Linksdrehfeld unter Beibehaltung der angeschlossenen Phasen. Diese Art der Richtungsumkehr ist zwingend erforderlich, da der Motoranker nur auf diese Weise exakt aus seiner zuletzt eingenommenen Position heraus in eine neue gefahren werden kann.

Grundsätzlich ist, insbesondere bei jeder Inbetriebnahme, oder vor Prozeßbeginn stets von größter Wichtigkeit, das Regelsystem in einen definierten Zustand zu bringen.

Eine exakte Winkelschrittsteuerung des an diesem Regelsystem angeschlossenen Drehstrommotors 100 ist nur möglich, solange der Motoranker stets synchron der Drehstromfrequenz (f_{cn}) folgt. Es ist daher von größter Wichtigkeit, daß dieser das Kippmoment (M_{K}) zu keinem Zeitpunkt erreicht, oder gar überschreitet. Aus diesem Grunde ist eigens dazu eine Nennmomentüberwachung 120 vorgesehen, die sich an zwei Nennmomentwerten (Nm1; Nm2) orientiert. Übersteigt der am Drehmomentgeber aufgenommene Wert die Nennmomentgrenze (Nm1), wird der Nml-Ausgang der Nennmomentüberwachung 120 aktiviert und als Steuerwarnsignal über die Signalleitung 12 an den Eingang des Drehstromgenerators 1 und weiter zur Frequenzsteuerung 7 geleitet. In dessen Folge mindert sich analog die Motornetzfrequenz (fₙ), damit verbunden die Motordrehzahl und schließlich das Drehmoment des Motorankers. Für den Fall, daß das Drehmoment, trotz Drehzahlminderung, dennoch weiter ansteigen soll und schließlich den Nennmomentgrenzwert (Nm2) erreicht werden sollte, wird alsdann der Ausgang des Nm2 12 aktiv, was die sofortige Stillsetzung des Drehstrommotors 100 zur Folge hat.

## Patentansprüche

1. Digitaler, frequenz- und amplitudenvariabler Drehstromgenerator (1) mit mindestens drei Sinusgeneratoren (2, 3, 4), die insbesondere als Digital/Analog-Wandler ausgebildet sind, mindestens einem digital gesteuerten Oszillator (6), von dem die Sinusgeneratoren (2, 3, 4) mit variabler Frequenz angesteuert werden, wobei Amplitudenwerte erzeugt werden, indem Amplitudenzähler (34) synchron zu Zähler (31) für Phasenwerte hoch- oder runtergezählt werden,
einem Ordinatenspeicher (33), der die Amplitudenwerte adressierbar enthält, wobei die Adressen der Amplitudenwerte von Zählern (31, 34) angegeben werden, einer Frequenzsteuerung, die zwischen einer einstellbaren Start- und einer Endfrequenz dem digital gesteuerten Oszillator (6) die Variation der Frequenzen vorgibt, und einer Schnittstelle (15), die zur Bestimmung der Frequenzen und Amplituden der Signale der Sinusgeneratoren (2, 3, 4) Werte entgegennimmt oder ausgibt.

2. Digitaler, frequenz- und amplitudenvariabler Drehstromgenerator (1) gemäß Anspruch 1, dadurch gekennzeichnet, daß die drei Sinusgeneratoren (2, 3, 4) jeweils um 120° zueinander phasenverschobene Sinusspannungen erzeugen.

3. Digitaler, frequenz- und amplitudenvariabler Drehstromgenerator (1) gemäß Anspruch 1, dadurch gekennzeichnet, daß die Schnittstelle (15) über einen bidirektionalen Puffer (16) Werte entgegennimmt oder an diesen Puffer Werte ausgibt.

4. Digitaler, frequenz- und amplitudenvariabler Drehstromgenerator (1) gemäß Anspruch 1, dadurch gekennzeichnet, daß der digital gesteuerte Oszillator (6) einen Zähler (25) für eine variable Phaseneinteilung und einen Addierer (26) enthält, die Daten austauschen.

5. Digitaler, frequenz- und amplitudenvariabler Drehstromgenerator (1) gemäß Anspruch 1, dadurch gekennzeichnet, daß die Sinusgeneratoren (2, 3, 4) einen Zähler (31) für Phasengrobeinteilung, einen Zähler (34) für Amplitudenwerte, einen Ordinatenspeicher (33) und logische Einheiten (35, 37) enthalten.

6. Digitaler, frequenz- und amplitudenvariabler Drehstromgenerator (1) gemäß Anspruch 5, dadurch gekennzeichnet, daß der Ordinatenspeicher (33) adressierbare Speicherplätze mit 1 Bit Wortlänge enthält.

7. Digitaler, frequenz- und amplitudenvariabler Drehstromgenerator (1) gemäß Anspruch 5, dadurch gekennzeichnet, daß die logischen Einheiten (35, 37) die Zählrichtung für die Zähler (31, 34) steuern.

8. Digitaler, frequenz- und amplitudenvariabler Drehstromgenerator (1) gemäß Anspruch 1, dadurch gekennzeichnet, daß die Sinusgeneratoren (2, 3, 4) mit einem Analogschalter (53) zur Invertierung der Ausgangsspannung bei einem Phasenwinkel von 180° und zum Zurückschalten auf die nichtinvertierte Ausgangsspannung bei 0^{o} = 360^{o} versehen sind, und einen Zähler (54) und Vergleichsbausteine 56 aufweisen.

9. Digitaler, frequenz- und amplitudenvariabler Drehstromgenerator (1) gemäß Anspruch 1, dadurch gekennzeichnet, daß von Frequenzsteuerung (7) ein D/A-Wandler (23) mit einem digitalen Wert beaufschlagt wird, und die Ausgabe des D/A-Wandlers (23) die Amplituden der analogen Ausgabe der Sinusgeneratoren (2, 3, 4) variiert.

10. Steuerungsanordnung für einen winkelschrittgesteuerten Synchron-Drehstrommotor (100) mit
einem digitalen, frequenz- und amplituden variablen Drehstromgenerator (1) gemäß Anspruch 1,
einem Mikroprozessor (101), dem ein Winkelweg als Soll-Position, ein Nennmoment, eine Stellgeschwindigkeit und eine Rampensteilheit als Daten eingegeben werden,
einem Leistungsverstärker (110), an dessen Eingang ein vom Drehstromgenerator ausgegebenes Dreiphasen-Drehspannungssystem anliegt, und der einen, einerseits der Phasenlage und Winkelgeschwindigkeit des anliegenden Dreiphasen-Drehspannungssystems, andererseits der vom Synchron-Drehstrommotor (100) aufgenommenen Leistung entsprechenden, Drehstrom erzeugt und an die Klemmen des Synchron-Drehstrommotors (100) ausgibt,
einer Nennmomentüberwachung (120), die, aufgrund der am Leistungsverstärker (110) oder an den Klemmen des Synchron-Drehstrommotors (100) gemessenen Ströme und Spannungen, den Lastwinkel bestimmt und daraus das Moment feststellt und mit mindestens einer ersten Nennmomentgrenze vergleicht, wobei die Nennmomentüberwachung (120) das aktuelle Moment an den Mikroprozessor 101 übergibt und bei einem Anwachsen des Momentes über die mindestens eine Nennmomentgrenze mindestens ein Ausgangssignal erzeugt und an die Frequenzsteuerung (7) des Drehstromgenerators (1) ausgibt.

## Claims

1. Digital, variable frequency and amplitude alternating current generator (1) with at least three sine-wave generators (2, 3, 4), particularly in the form of digital-to-analog converters; at least one digital controlled oscillator (6) to which the sine-wave generators (2, 3, 4) addressed at a variable frequency respond, with amplitude values being generated by amplitude counters (32) being counted up or down synchronously with the phase value counter (31); an ordinate memory (33) containing the amplitude values in an addressable form, with the addresses of the amplitude values being indicated by counters (31, 34); a frequency control system imposing upon the digital controlled oscillator (6) the variation of the frequencies to prevail within the range between given adjustable starting and final frequency values; and an interface (15) which receives or outputs the values necessary for the determination of the frequencies and amplitudes of the signals of the sine-wave generator (2, 3, 4).

2. Digital, variable frequency and amplitude alternating current generator (1) according to claim 1, wherein the three sine-wave generators (2, 3, 4) generate sinusoidal voltages out of phase by 120° one against another.

3. Digital, variable frequency and amplitude alternating current generator (1) according to claim 1, wherein the interface (15) receives values from, or outputs values to, a bidirectional buffer (16).

4. Digital, variable frequency and amplitude alternating current generator (1) according to claim 1, wherein the digital controlled (6) contains a counter (25) for variable phase divisioning and an adder (26).

5. Digital, variable frequency and amplitude alternating current generator (1) according to claim 1, wherein the sine-wave generators (2, 3, 4) contain a counter (31) for phase coarse divisioning, an adder (34) for amplitude values, an ordinate memory (33) and logic units (35, 37).

6. Digital, variable frequency and amplitude alternating current generator (1) according to claim 5, wherein the ordinate memory (33) contains addressable storage units at a word length of 1 bit each.

7. Digital, variable frequency and amplitude alternating current generator (1) according to claim 5, wherein the logic units (35, 37) control the advance sense of the counters (31, 34).

8. Digital, variable frequency and amplitude alternating current generator (1) according to claim 1, wherein the sine-wave generators (2, 3, 4) are provided with an analog switch (53) enabling both an inversion of the output voltage at a phase angle of 180° and switching back to the non-inverted output voltage at 0° = 360°, as well as with a counter (54) and comparison modules (56).

9. Digital, variable frequency and amplitude alternating current generator (1) according to claim 1, wherein the frequency control system (7) acts upon a D/A converter (23) by imposing a digital value upon it, and wherein the output of the D/A converter (23) acts upon the sine-wave generators (2, 3, 4) by varying the amplitudes of the analog output of such sine-wave generators (2, 3, 4).

10. Control arrangement for an angular-step controlled synchronous three-phase current motor (100) constituted of a digital, variable frequency and amplitude alternating current generator (1) according to claim 1; a microprocessor (101) into which an angular pitch length in the form of a set position, a nominal moment, a regulating speed, and a ramp rate of rise, are entered in the form of data; a power amplifier (110), with a three-phase rotary voltage system generated by the alternating current generator being applied to its input end, which generates, and outputs to the binders of the synchronous three-phase current motor (100), a rotary current that corresponds both to the phase position and angular velocity of the three-phase rotary voltage system applied and to the power draw of the synchronous three-phase current motor (100); a nominal moment control system (120) which, on the basis of the currents and voltages measured at both the power amplifier (110) and the binders of the synchronous three-phase current motor (100), determines the load angle and the resulting moment and compares the latter with at least one nominal moment limiting value, with the nominal moment control system (120) transmitting the current moment at each time to the microprocessor (101) and generating at least one output signal transmitted to the frequency control system (7) of the alternating current generator (1) as soon as an increase of the moment occurs which exceeds the, at least one, nominal moment limiting value.

## Revendications

1. Alternateur triphasé numérique (1) à fréquences et amplitudes variables, comportant au moins trois générateurs d'ondes sinusoïdales (2, 3, 4) conçus en particulier comme convertisseurs numérique-analogique, au moins un oscillateur commandé numériquement (6) à partir duquel les générateurs d'ondes sinusoïdales (2, 3, 4) sont commandés avec des fréquences variables, où les valeurs d'amplitude sont obtenues en faisant compter vers le haut ou le bas le compteur d'amplitude (34) en synchronicité avec le compteur (31), pour les valeurs de phase,
une mémoire d'ordonnées (33) qui renferme les adresses des valeurs d'amplitude, où les adresses des valeurs d'amplitude sont fournies par des compteurs (31, 34), une commande de fréquence qui prescrit à l'oscillateur à commande numérique (6) la variation des fréquences entre une fréquence initiale et une fréquence finale et une interface (15) qui reçoit ou émet des valeurs afin de déterminer les fréquences et amplitudes des signaux des générateurs d'ondes sinusoïdales (2, 3, 4).

2. Alternateur triphasé numérique à fréquences et amplitudes variables (1) selon la revendication 1, caractérisé en ce que les trois générateurs d'ondes sinusoïdales (2, 3, 4) produisent des tensions sinusoïdales décalées en phase de 120° l'une par rapport à l'autre.

3. Alternateur triphasé numérique à fréquences et amplitudes variables (1) selon la revendication 1, caractérisé en ce que l'interface (15) reçoit des valeurs par le biais d'un tampon bidirectionnel (16) ou émet des valeurs en direction dudit tampon.

4. Alternateur triphasé numérique à fréquences et amplitudes variables (1) selon la revendication 1, caractérisé en ce que l'oscillateur à commande numérique (6) comprend un compteur (25) pour une répartition variable de phases et un totalisateur (26) qui échangent des données.

5. Alternateur triphasé numérique à fréquences et amplitudes variables (1) selon la revendication 1, caractérisé en ce que les générateurs d'ondes sinusoïdales (2, 3, 4) comprennent un compteur (31) pour la répartition approximative de phases, un compteur pour les valeurs d'amplitude, une mémoire d'ordonnées (33) et des unités logiques (35, 37).

6. Alternateur triphasé numérique à fréquences et amplitudes variables (1) selon la revendication 5, caractérisé en ce que la mémoire d'ordonnées (33) comprend des emplacements de mémoire à accès direct avec une longueur de mot de 1 bit.

7. Alternateur triphasé numérique à fréquences et amplitudes variables (1) selon la revendication 5, caractérisé en ce que les unités logiques (35, 37) commandent le sens de comptage des compteurs (31, 34).

8. Alternateur triphasé numérique à fréquences et amplitudes variables (1) selon la revendication 1, caractérisé en ce que les générateurs d'ondes sinusoïdales (2, 3, 4) sont munis d'un commutateur analogue (53) pour inverser la tension de sortie lorsqu'on a un angle de phase de 180° et pour revenir à la tension de départ non inversée lorsque 0 = 360°, et qu'ils comprennent un compteur (54) et des modules de comparaison (56).

9. Alternateur triphasé numérique à fréquences et amplitudes variables (1) selon la revendication 1, caractérisé en ce qu'un convertisseur numérique-analogique (23) reçoit une valeur numérique de la commande de fréquences (7)et que la valeur de sortie du convertisseur numérique-analogique (23)fait varier les amplitudes de la valeur analogue de sortie des générateurs d'ondes sinusoïdales (2, 3, 4).

10. Agencement de commande pour moteur triphasé synchrone (100) à commande d'angle pas-à-pas avec
un alternateur triphasé numérique à fréquences et amplitudes variables (1) selon la revendication (1),
un microprocesseur (101) auquel sont communiqués sous forme de données un chemin d'angle en tant que position de référence, un couple nominal, une vitesse de réglage et une déclivité de rampe,
un amplificateur de puissance (110), à l'entrée duquel se trouve
un système de tension rotatoire à trois phases émis par le générateur de courant triphasé, ledit générateur produisant un courant triphasé qui correspond d'une part à la relation des phases et à la vitesse d'angle du système adjacent de tension rotatoire à trois phases et d'autre part à la puissance recue du moteur triphasé synchrone (100), ce courant étant ensuite transmis aux bornes du moteur de courant triphasé synchrone (100),
un contrôle du couple nominal (120) qui détermine l'angle de charge et en déduit le couple à partir des courants et tensions mesurés aux bornes du moteur triphasé synchrone (100) et les compare à au moins une première limite du couple nominal, où le contrôle du couple nominal (120) transmet le couple réel au microprocesseur (101) et, en cas de dépassement d'au moins une limite du couple nominal, émet au moins un signal de sortie et l'envoie à la commande de fréquence (7) du générateur de courant triphasé (1).
